# EUROPEAN PATENT SPECIFICATION

(11) **EP 4 068 825 B1**
(45) Date of publication and mention of the grant of the patent: **03.07.2024**
(21) Application number: 22164053.5
(22) Date of filing: 24.03.2022
(51) Int. Cl.: H04W 12/121, H04W 12/63, H04W 4/021, H04W 12/65, H04W 12/79, H04W 12/80, H04W 8/00, H04M 3/22, H04M 3/38

(54) **SYSTEM FOR DETECTING AN ILLEGAL USE OF A PERSONAL WIRELESS COMMUNICATION DEVICE**
SYSTEM ZUR ENTDECKUNG ILLEGALER BENUTZUNG EINES DRAHTLOSEN KOMMUNIKATIONSGERÄTS
SYSTÈME DE DÉTECTION D'USAGE ILLÉGAL D'APPAREIL DE COMMUNICATION SANS FIL.

(30) Priority: 29.03.2021 IT 202100007601
(43) Date of publication of application: 05.10.2022
(73) Proprietor: Torrisi, Gaetano, 95123 Catania (IT); Automation Service S.r.l., 96010 Priolo Gargallo (SR) (IT)
(72) Inventor: TORRISI, Gaetano, 95123 Catania (IT); TORNATORE, Francesco, 96010 Priolo Gargallo (SR) (IT); PORTO, Domenico, 96010 Priolo Gargallo (SR) (IT); RENO, Marco, 96010 Priolo Gargallo (SR) (IT)
(74) Representative: Carangelo, Pierluigi

(56) References cited:
- CN-A- 107 579 802
- US-A1- 2014 194 084
- US-A1- 2017 208 435
- US-A1- 2018 167 774
- US-A1- 2018 220 301

## Description

The present description relates to the technical field of systems for detecting an illegal use of a personal wireless communication device in the spaces in which such a use it not allowed. For example, the invention relates to a system which can be employed to detect the possession or the illegal use of a personal wireless communication device by a prisoner in a penitentiary institute.

The use and possession by prisoners in penitentiary institutes of personal wireless communication devices such as, for example smartphones, tablet-PCs, smartwatches, is prohibited by current legal provisions in several nations. Despite disciplinary measures or criminal sanctions being imposed in certain cases to protect this ban, it is not infrequent for personal wireless communication devices to be illegally introduced into the penitentiary institutes and used by prisoners to make voice calls, exchange text or voice messages by means of SMS or instant messaging systems.

Currently, it is particularly complex and difficult to discover the illegal use of personal wireless communication devices in the above-mentioned circumstances. This is due to the fact that the checking is all but limited to the supervising and patrolling activities by the prison security staff, given that no technological tools for allowing continuous, automated, or at least partly automated, monitoring in fact exist. US 2018/0220301 A1 discloses a managed access system for mobile wireless devices. US 2014/194084 A1 discloses systems and methods for detecting and controlling transmission devices. US 2018/167774 A1 discloses a system and method for detecting and locating contraband devices in a secure environment.

It is the object of the present invention to provide a reliable and accurate system which allows an illegal use of a personal wireless communication device to be detected in a continuous, automatic, or semi-automatic manner.

This and other objects are achieved by a system for detecting an illegal use of a personal wireless communication device as defined in claim 1 in its most general form, and in some particular embodiments of it in the dependent claims.

The invention will become more apparent from the following detailed description of the embodiments thereof, given by way of non-limiting examples, with reference to the accompanying drawings, in which:
- Figure 1 shows a diagrammatic view of an embodiment, given by way of a non-limiting example, of a detection system adapted and configured to detect an illegal use of a personal wireless communication device, in which the detection system is associated with a plurality of spaces to be monitored;
- Figure 2 shows a functional block diagram of an embodiment, given by way of a non-limiting example, of a peripheral control unit which can be employed in the detection system in Figure 1;
- Figure 3 diagrammatically shows an example of distribution of the frequency spectrum of the detected electrical signal in a plurality of spectrum portions.

Equal or similar elements will be indicated by the same reference signs in the accompanying drawings.

With reference to the accompanying drawings, a detection system adapted and configured to detect an illegal use of a personal wireless communication device 2 by a user 3 is indicated globally by 1. The teachings of the present description in particular are applied to the detection and monitoring of the illegal use, or also the illegal possession in general, of personal wireless communication devices 2. Illegal use means a use prohibited by a law or regulation. More specifically, without thereby introducing any limitation, in an embodiment, the detection system 1 advantageously can be employed to detect the illegal use and possession of personal wireless communication devices 2 by prisoners 3 in a penitentiary facility, in particular in detention cells. Other possible applications of the detection system 1 relate to, for example carrying out school or qualification exams, carrying out competitions, voting, or also circumstances in general in which the use of personal wireless communication devices 2 is not allowed or is dangerous or causes a disturbance.

For the purposes of the present description, personal wireless communication device 2, from now on also called communication device 2 in short, means any wireless mobile communication device which is operatively connectable to a radio-cellular network, for example a GSM, EDGE, GPRS, 3G, 4G, LTE, 5G network. Such a communication device 2 is therefore provided with a modem for connection to a radio-cellular mobile network. Possible examples of communication devices 2 of this type are cellular phones, smartphones, tablet-PCs, laptop PCs, smartwatches, etc. The illegal use can relate to activities of turning ON the communication device 2, sending and receiving voice calls, text messages, voice messages, chat messages, email messages, as well as also looking at websites, sending and completing forms on websites, etc.

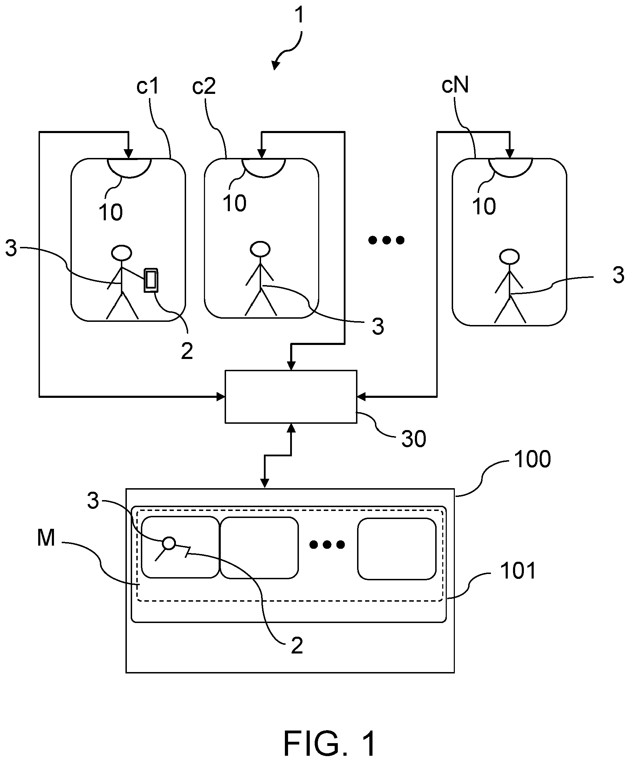

The detection system 1 comprises a plurality of peripheral control units 10, each installed, or intended to be installed, in a respective space c1, c2, ..., cN to be monitored. The spaces to be monitored c1, c2, ..., cN are indoor spaces, for example places or rooms in buildings. In the particular example in Figure 1, N peripheral control units 10 are shown, each of them being installed in a respective space c1, c2, ..., cN to be monitored. Number N is a whole number greater than or equal to two, and may be as large or small as desired. The spaces to be monitored c1, c2, ..., cN are, for example detention cells or rooms in general in a penitentiary facility. Preferably, the peripheral control units 10 are installed in the spaces to be monitored c1, c2, ..., cN and preferably, on a wall of the ceiling in such spaces.

The detection system 1 further comprises a central control unit 100 operatively connected to the plurality of peripheral control units 10.

The central control unit 100 is, for example installed in a room spatially displaced from the spaces to be monitored c1, c2, ..., cN, for example in a room overseen by personnel authorized to access the central control unit 100. The central control unit 100 preferably is a remote unit, where remote means that it is located at a given distance from the peripheral control units 10, both in the same building or in the same facility in which the spaces to be monitored c1, c2, ..., cN are displaced, or in a different building or facility, located at a small or large distance, as desired.

Each peripheral control unit 10 comprises a radiofrequency signal detector 11 adapted and configured to pick up electromagnetic radiations transmitted and/or received by the personal wireless communication device 2 in an operative frequency spectrum in order to generate a detected electrical signal related to such electromagnetic radiations. Operative frequency spectrum means a spectrum portion of the radiofrequency electromagnetic radiations which on the one hand represents the frequency spectrum used in the receiving and transmission by the personal wireless communication devices 2, and on the other, also represents the operating band of the radiofrequency signal detector 11, that is the range of frequencies to which the radiofrequency signal detector 11 is sensitive. The aforesaid range of frequencies, or operative frequency spectrum, is for example 60 MHz to 2.5 GHz.

The radiofrequency signal detector 11 comprises, for example at least one LNA, and preferably also at least one intermediate frequency converter. According to a particularly advantageous embodiment, the radiofrequency signal detector 11 has a gain which is electronically controllable by the central control unit 100.

According to a particularly advantageous embodiment, the radiofrequency signal detector 11 is, or comprises, a DVB-T digital terrestrial signal receiver-synthesizer and preferably has a USB connection interface. Here therefore, the detected electrical signal is a serial signal. The aforesaid detected electrical signal is, for example a digital signal which for each of a plurality of spectrum portions S1-S5, has a given datum pertaining to a measurement of power and/or amplitude, expressed in dB, for example.

Each peripheral control unit 10 further comprises a processing unit 12 operatively connected to the radiofrequency signal detector 11 for receiving the detected electrical signal. The processing unit 12 is adapted and configured to analyze the detected electrical signal and to generate at least one alarm message when it determines that the detected electrical signal meets at least one alarm condition. The processing unit 12 comprises hardware and software components which allow it to receive data, store data, process data and generate in output processed data. It may, for example, comprise a processor, a microcontroller, an FPGA, a DSP, a single board computer such as, for example a Raspberry, etc.

Each peripheral control unit 10 further comprises a communication interface 13 adapted to operatively connect the peripheral control unit 10 to the central control unit 100 to allow the alarm message to be sent to the central control unit 100. Alarm message means any signal or data group or package having data identifying, or associated with, an alarm condition.

According to a preferred embodiment, the communication interface 13 is a wired communication interface. According to a particularly advantageous embodiment, the wired communication interface 13 is an Ethernet interface, and the peripheral control unit 10 is fed by means of a PoE (Power over Ethernet) system. Thereby, the peripheral control unit 10 may, by means of a single wire, can be both connected to the network and provided with the power supply required for the operation thereof.

If the communication interface 13 is an Ethernet interface, the detection system 1 preferably comprises at least one Ethernet switch 30 adapted and configured to connect a plurality of peripheral control units 10 to the central control unit 100. The communication between the peripheral control unit 10 and the central control unit 100 occurs by means of the communication interface 13 preferably by means of Modbus TCP protocol.

The processing unit 12 is adapted and configured to:
- analyze a plurality of separate portions S1-S5 of frequency spectrum FS of the detected electrical signal;
- determine that the aforesaid alarm condition occurred if the processing unit 12 detects that a difference in a measurement of power and/or amplitude of the detected electrical signal exceeds a threshold value in at least two consecutive time analysis periods of a same portion of frequency spectrum.

In other words, exceeding the aforesaid difference in the threshold value in a spectrum portion S1-S5 in a given time analysis period which is followed by a temporarily successive analysis period related to the same spectrum portion in which exceeding the threshold value is not detected, does not generate the alarm message but possibly generates a pre-alarm message. Instead, exceeding the aforesaid difference in the threshold value in a spectrum portion S1-S5 in a given time analysis period which is followed by a temporarily successive analysis period related to the same spectrum portion in which exceeding the threshold value a second time is detected, generates the alarm message.

According to a particularly advantageous embodiment, the aforesaid threshold value is electronically programmable for each of the peripheral control units 10, by the central control unit 100 and preferably is independently selectable for each of the peripheral control units 10.

Advantageously, the threshold value is a threshold value which can be specifically programmed or is selected for each of the portions of frequency spectrum S1-S5 analyzed by the processing unit 12.

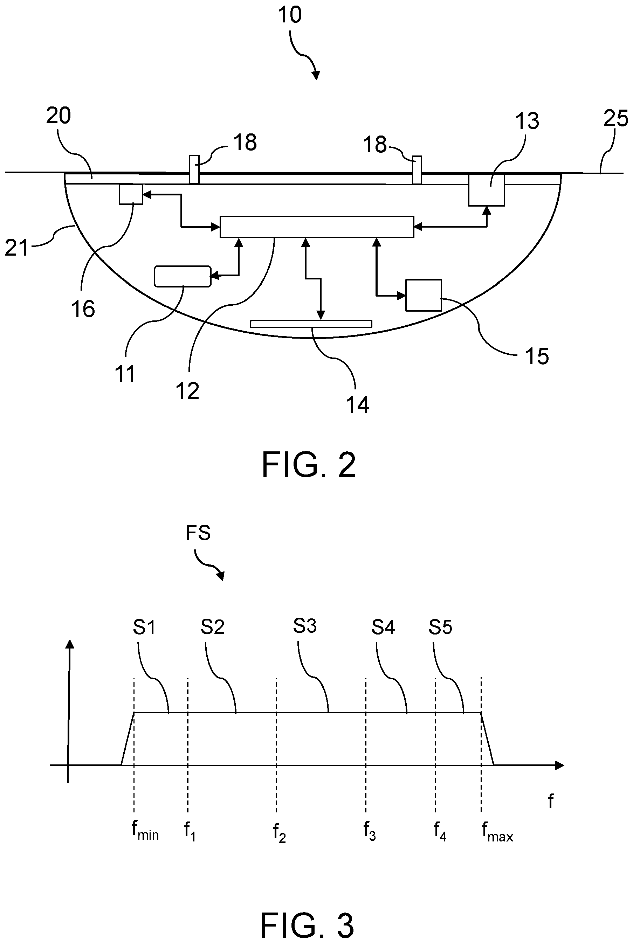

Figure 3 diagrammatically shows the frequency spectrum FS of the detected electrical signal and a possible distribution thereof in five spectrum portions S1-S5. It should be noted that such a number is merely indicative and that the frequency spectrum FS may be distributed in a greater or smaller number of spectrum portions S1-S5. Spectrum FS extends from a minimum frequency fₘᵢₙ to a maximum frequency fₘₐₓ.

Advantageously, the division of the analysis of spectrum FS of the detected electrical signal in a plurality of spectrum portions S1, ..., S5 allows the false alarms due, for example, to background or environmental electromagnetic noise, to be decreased, and the specific activities that user 3 is performing with the communication device 2 also to be accurately, or at least indicatively, discriminated against. For example, if user 3 is making a voice call, there will be a concentration of the power of the radio signal transmitted by the communication device 2 in a spectrum portion S3, if the user is sending or receiving an SMS, there will be a concentration of the power of the signal transmitted or received in a different spectrum portion S1, if the user is watching a video, in a different spectrum portion S5.

According to a possible advantageous embodiment, the processing unit 12 is adapted and configured to periodically analyze separate spectrum portions S1-S5 of the detected electrical signal in time sequence. For example, the processing unit 12 scans the whole spectrum FS in a given scanning time period, analyzing the spectrum portions S1-S5 in sequence, and after completing the analysis, scans the whole spectrum FS again in a successive scanning period, analyzing the spectrum portions S1-S5 in sequence, and so on in a cyclical manner. The scanning time period is, for example, equal to, or in the order of, 1 s.

According to a particularly advantageous embodiment, the processing unit 12 is adapted and configured to:
- analyze the detected electrical signal; and
- generate at least one pre-alarm message if it determines that the detected electrical signal meets at least one pre-alarm condition, in which the processing unit 12 is such that it determines that said pre-alarm condition is met if it detects that a difference in a measurement of power and/or amplitude of the electrical signal in the spectrum portion S1-S5 exceeds a threshold value in at least one analysis period of a spectrum portion S1-S5 with respect to the preceding, preferably immediately preceding, analysis period;
- send the pre-alarm message to the peripheral control unit 100.

As mentioned above, the alarm condition is determined if instead the aforesaid difference exceeds the threshold value for two successive, preferably immediately successive, measuring periods.

In other words, exceeding the aforesaid difference in the threshold value in a same spectrum portion S1-S5 in a given time analysis period for two successive measuring cycles, generates the pre-alarm message. This, for example, allows getting the attention of an operator monitoring the central control unit 100. Moreover, as at least already partly explained, after the generation of the pre-alarm message, exceeding the aforesaid difference in the threshold value in a same spectrum portion S1-S5 in a successive, preferably immediately successive, time analysis period generates the first alarm message. Although it is convenient for the threshold value used for determining the pre-alarm condition to be equal to the threshold value used for determining the alarm condition, in different embodiments these threshold values may be selected or set so as to differ from each other. For example, the threshold value of the pre-alarm condition may be lower than the threshold value of the alarm condition.

According to a particularly advantageous embodiment, the peripheral control unit 10 further comprises an image acquisition unit 14 operatively connected to the processing unit 12. The image acquisition unit 14 is adapted and configured to acquire one or more images of said space c1, c2, ..., cN to be monitored. The processing unit 12 is such that it sends said one or more acquired images to the central control unit 100 if it determines that the electrical signal meets said alarm condition and/or pre-alarm condition.

The image acquisition unit 14 comprises, for example, a camera or video camera adapted to acquire images in the visible spectrum and/or the infrared spectrum. Preferably, the image acquisition unit 14 allows a flow of images, for example a video sequence having ten or about ten images per second or having at least ten images per second to be acquired.

According to a particularly advantageous embodiment, the processing unit 12 is such that it controls the image acquisition unit 14 to enable and disable it. Preferably, the image acquisition unit 14 usually is disabled and at the occurrence of the pre-alarm and/or alarm condition, the processing unit 12 is such that it enables the image acquisition unit 14 and is such that it sends one or more acquired images to the central control unit 100 after said enabling only following the occurrence of the alarm condition. Thereby, one or more images advantageously may begin to be locally acquired at the occurrence of the pre-alarm and/or alarm condition and such images may be sent to the central control unit 100. The locally acquired images are preferably stored in a local memory unit which is integrated in or connected to the processing unit. This expedient allows a particular efficiency to be obtained in terms of processing and transmission resources, as well as privacy to be protected.

According to an advantageous embodiment, the central control unit 100 comprises a display device 101 such as, for example, an LCD or OLED display, and is adapted and configured to show said one or more acquired images on the display device 101 once they have been transmitted by the peripheral control unit 10 to the central control unit 100.

According to an advantageous embodiment, the central control unit 100 is adapted and configured to show a map M of spaces c1, c2, ..., cN monitored by the detection system 1 on the display device 101. Advantageously, the acquired images are displayed in a portion of map M corresponding to space c1, c2, ..., cN with which the peripheral control unit 10 that sent the alarm message is associated. Thereby, it may be particularly quickly and efficiently identified in which of the monitored spaces c1, c2, ..., cN the alarm condition occurred, and therefore action to stop and/or sanction the illegal use of the communication device 2 may be taken.

Moreover, according to an advantageous embodiment, also the occurrence of a pre-alarm condition in a monitored space c1, c2, ..., cN may be signaled on map M. For example, the central control unit 100 may be adapted and configured, that is programmed, to graphically mark on map M the monitored space c1, ..., cN in which the pre-alarm and/or alarm condition was detected, for example by means of a box or colored frame (for example, yellow), and display the acquired images or generally graphically signal this occurrence.

According to a particularly advantageous embodiment, the peripheral control unit 10 further comprises a fire-alarm sensor 15 operatively connected to the processing unit 12 to provide a further electrical signal. Here, the processing unit 12 is adapted and configured to send a further alarm message if said further electrical signal has data representative of a possible fire in the space c1, c2, ..., cN to be monitored.

According to a preferred embodiment, the peripheral control unit 10 comprises a container body 20, 21 and at least one fixing element 18 adapted and configured to fix the container body 20, 21 to an installation wall 23, preferably a ceiling, which delimits the space c1, c2, ..., cN to be monitored. The fixing element 18 comprises, for example, one or more screws. For example, the container body 20, 21 comprises a base 20 and a cover 21 removably or non-removably fixed to base 20. Base 20 may be fixed to an installation wall 25 by means of one or more screws 18.

According to an advantageous embodiment, the peripheral control unit 10 comprises a tamper sensor 16 operatively connected to the processing unit 12 and the processing unit is adapted and configured to send a tamper alarm signal to the central control unit 100 if it detects that a tamper condition is met. Such a condition is, for example, met if the processing unit 12 detects a removal or an attempted removal of the containment body 20, 21 from the installation wall, or if it detects an opening of or damage to, or an attempted opening of or damage to, the containment body 20, 21. The tamper sensor 16 is or comprises, for example a shock sensor (for example, an inertial accelerometer) or an opening sensor (for example, a switch, a Reed sensor, etc.).

On the basis of what has been described above, it is thus possible to understand how a detection system 1 of the type described above allows fully achieving the purposes mentioned above with reference to the background art.

Indeed, the above-described detection system 1 allows the illegal use of a personal wireless communication device in a space to be monitored to be automatically, or semi-automatically, detected in a continuous and accurate manner.

Without prejudice to the principle of the invention, the embodiments and the manufacturing details may be broadly varied with respect to the above description disclosed by way of a non-limiting example, without departing from the scope of the invention as defined in the appended claims.

## Claims

1. A detection system (1) adapted and configured to detect an illegal use of a personal wireless communication device (2), comprising:
- a plurality of peripheral control units (10), each installed, or intended to be installed, in a respective indoor space (c1, c2, ..., cN) to be monitored;
- a central control unit (100) operatively connected to the plurality of peripheral control units (10), preferably by means of Modbus TCP protocol;
wherein each peripheral control unit (10) comprises:
- a radiofrequency signal detector (11) adapted and configured to pick up electromagnetic radiations transmitted and/or received by the personal wireless communication device (2) in an operative frequency spectrum and to generate a detected electrical signal related to such electromagnetic radiations;
- a processing unit (12) operatively connected to the radiofrequency signal detector (11) for receiving the detected electrical signal, wherein the processing unit (12) is adapted and configured to analyze the detected electrical signal and to generate at least one alarm message if it determines that the detected electrical signal meets at least one alarm condition;
- a communication interface (13) adapted to operatively connect the peripheral control unit (10) to the central control unit (100) to allow the alarm message to be sent to the central control unit (100);
wherein the processing unit (12) is adapted and configured to:
- analyze a plurality of separate portions (S1-S5) of frequency spectrum (FS) of the detected electrical signal;
- determine that said alarm condition occurred if it detects that a difference in a measurement of power and/or amplitude of the electrical signal exceeds a first threshold value in at least two consecutive time analysis periods of a same portion (S1-S5) of frequency spectrum (FS) .

2. A detection system (1) according to claim 1, wherein the communication interface (13) is a wired communication interface.

3. A detection system (1) according to claim 2, wherein the wired communication interface (13) is an Ethernet interface, and wherein the peripheral control unit (10) is fed by means of a PoE (Power over Ethernet) system.

4. A detection system (1) according to any one of the previous claims, wherein the processing unit (12) is adapted and configured to periodically analyze separate spectrum portions (S1-S5) of the detected electrical signal in time sequence.

5. A detection system (1) according to any one of the previous claims, wherein the processing unit (12) is adapted and configured to:
- analyze the detected electrical signal; and
- generate at least one pre-alarm message if it determines that the detected electrical signal meets at least one pre-alarm condition, wherein the processing unit (12) is such that it determines that said pre-alarm condition is met if it detects that a difference in a measurement of power and/or amplitude of the electrical signal in the spectrum portion exceeds a threshold value in at least one analysis period of a spectrum portion (S1-S5) ;
- send the pre-alarm message to the peripheral control unit (100).

6. A detection system (1) according to any one of the preceding claims, wherein the peripheral control unit (10) further comprises an image acquisition unit (14) operatively connected to the processing unit (12), adapted to acquire one or more images of said space (c1, c2, ..., cN) to be monitored, and wherein the processing unit (12) is such that it sends said one or more images to the central control unit (100) if it determines that the electrical signal meets said alarm condition.

7. A detection system (1) according to claims 5 and 6, wherein the processing unit (12) is such that it activates the image acquisition unit (14) when the pre-alarm and/or alarm condition occurs and is such that it sends one or more images to the central control unit (100).

8. A detection system (1) according to claim 6 or 7, wherein the central control unit (100) comprises a display device (101) and is adapted and configured to show said one or more acquired images on the display device (101).

9. A detection system (1) according to claim 8, wherein the central control unit (100) is adapted and configured to show a map (M) of spaces (c1, c2, ..., cN) monitored by the detection system (1) on the display device (101) and wherein said one or more acquired images are shown in a portion of map (M) corresponding to the space (c1, c2, ..., cN) with which the peripheral control unit (10) that sent the alarm message is associated.

10. A detection system (1) according to any one of the preceding claims, wherein the peripheral control unit (10) further comprises a fire-alarm sensor (15) operatively connected to the processing unit (12) to provide a further electrical signal, wherein the processing unit (12) is adapted and configured to send a further alarm message if said further electrical signal has data representative of a possible fire in the space (c1, c2, ..., cN) to be monitored.

11. A detection system (1) according to any one of the preceding claims, comprising a container body (20, 21) and at least one fixing element (18) adapted and configured to fix the container body (20, 21) to a wall (23), preferably a ceiling, which delimits said space (c1, c2, ..., cN) to be monitored.

12. A detection system (1) according to any one of the preceding claims, wherein the radiofrequency signal detector (11) is, or comprises, a DVB-T digital terrestrial signal receiver-synthesizer.

13. A detection system (1) according to claim 12, wherein the radiofrequency signal detector (11) has a USB connection interface and wherein the detected electrical signal is a serial signal.

14. A detection system (1) according to any one of the preceding claims, wherein the peripheral control unit (10) comprises a tamper sensor (16) operatively connected to the processing unit (12) and wherein the processing unit (12) is adapted and configured to send a tamper alarm signal to the central control unit (100) if the processing unit (12) detects that a tamper condition is met.

## Patentansprüche

1. Detektionssystem (1), das geeignet und konfiguriert ist, um eine illegale Verwendung eines persönlichen drahtlosen Kommunikationsgeräts (2) zu detektieren, umfassend:
- eine Mehrzahl peripherer Steuereinheiten (10), die jeweils in einem jeweiligen zu überwachenden Innenraum (c1, c2, ..., cN) installiert sind oder installiert werden sollen;
- eine zentrale Steuereinheit (100), die mit der Mehrzahl peripherer Steuereinheiten (10) wirkverbunden ist, vorzugsweise mittels des Modbus-TCP-Protokolls;
wobei jede periphere Steuereinheit (10) umfasst:
- einen Hochfrequenzsignaldetektor (11), der geeignet und konfiguriert ist, um vom persönlichen drahtlosen Kommunikationsgerät (2) gesendete und/oder empfangene elektromagnetische Strahlung in einem Betriebsfrequenzspektrum aufzunehmen und ein detektiertes elektrisches Signal in Bezug auf eine derartige elektromagnetische Strahlung zu generieren;
- eine Verarbeitungseinheit (12), die mit dem Hochfrequenzsignaldetektor (11) wirkverbunden ist, um das detektierte elektrische Signal zu empfangen, wobei die Verarbeitungseinheit (12) geeignet und konfiguriert ist, um das detektierte elektrische Signal zu analysieren und mindestens eine Alarmmeldung zu generieren, wenn sie bestimmt, dass das detektierte elektrische Signal mindestens eine Alarmbedingung erfüllt;
- eine Kommunikationsschnittstelle (13), die geeignet ist, um die periphere Steuereinheit (10) mit der zentralen Steuereinheit (100) wirkzuverbinden, um zu ermöglichen dass die Alarmmeldung an die zentrale Steuereinheit (100) gesendet wird;
wobei die Verarbeitungseinheit (12) geeignet und konfiguriert ist, um:
- eine Mehrzahl separater Abschnitte (S1-S5) des Frequenzspektrums (FS) des detektierten elektrischen Signals zu analysieren;
- zu bestimmen, dass die Alarmbedingung eingetreten ist, wenn sie detektiert, dass eine Differenz bei einer Messung von Leistung und/oder Amplitude des elektrischen Signals einen ersten Schwellenwert in mindestens zwei aufeinanderfolgenden Zeitanalyseperioden eines gleichen Abschnitts (S1-S5) des Frequenzspektrums (FS) überschreitet.

2. Detektionssystem (1) nach Anspruch 1, wobei die Kommunikationsschnittstelle (13) eine drahtgebundene Kommunikationsschnittstelle ist.

3. Detektionssystem (1) nach Anspruch 2, wobei die drahtgebundene Kommunikationsschnittstelle (13) eine Ethernet-Schnittstelle ist und wobei die periphere Steuereinheit (10) mittels eines PoE(Power over Ethernet/Stromversorgung über Ethernet)-Systems gespeist wird.

4. Detektionssystem (1) nach einem der vorhergehenden Ansprüche, wobei die Verarbeitungseinheit (12) geeignet und konfiguriert ist, um separate Spektrumsabschnitte (S1-S5) des detektierten elektrischen Signals periodisch in zeitlicher Abfolge zu analysieren.

5. Detektionssystem (1) nach einem der vorhergehenden Ansprüche, wobei die Verarbeitungseinheit (12) geeignet und konfiguriert ist, um:
- das detektierte elektrische Signal zu analysieren; und
- mindestens eine Voralarmmeldung zu generieren, wenn sie bestimmt, dass das detektierte elektrische Signal mindestens eine Voralarmbedingung erfüllt, wobei die Verarbeitungseinheit (12) derart ist, dass sie bestimmt, dass die Voralarmbedingung erfüllt ist, wenn sie detektiert, dass eine Differenz bei einer Messung von Leistung und/oder Amplitude des elektrischen Signals im Spektrumsabschnitt einen Schwellenwert in mindestens einem Analysezeitraum eines Spektrumsabschnitts (S1-S5) überschreitet;
- Senden der Voralarmmeldung an die periphere Steuereinheit (100).

6. Detektionssystem (1) nach einem der vorhergehenden Ansprüche, wobei die periphere Steuereinheit (10) ferner eine Bilderfassungseinheit (14) umfasst, die mit der Verarbeitungseinheit (12) wirkverbunden und geeignet ist, ein oder mehrere Bilder des zu überwachenden Raums (c1, c2, ..., cN) zu erfassen, und wobei die Verarbeitungseinheit (12) derart ist, dass sie das eine oder die mehreren Bilder an die zentrale Steuereinheit (100) sendet, wenn sie bestimmt, dass das elektrische Signal die Alarmbedingung erfüllt.

7. Detektionssystem (1) nach Anspruch 5 und 6, wobei die Verarbeitungseinheit (12) derart ist, dass sie die Bilderfassungseinheit (14) aktiviert, wenn die Voralarm- und/oder Alarmbedingung eintritt, und derart ist, dass sie ein oder mehrere Bilder an die zentrale Steuereinheit (100) sendet.

8. Detektionssystem (1) nach Anspruch 6 oder 7, wobei die zentrale Steuereinheit (100) ein Anzeigegerät (101) umfasst und geeignet und konfiguriert ist, um das eine oder die mehreren erfassten Bilder auf dem Anzeigegerät (101) darzustellen.

9. Detektionssystem (1) nach Anspruch 8, wobei die zentrale Steuereinheit (100) geeignet und konfiguriert ist, um auf dem Anzeigegerät (101) eine Karte (M) der vom Detektionssystem (1) überwachten Räume (c1, c2, ..., cN) darzustellen, und wobei das eine oder die mehreren erfassten Bilder in einem Abschnitt der Karte (M) dargestellt werden, der dem Raum (c1, c2, ..., cN) entspricht, dem die periphere Steuereinheit (10) zugeordnet ist, die die Alarmmeldung sendete.

10. Detektionssystem (1) nach einem der vorhergehenden Ansprüche, wobei die periphere Steuereinheit (10) ferner einen Feueralarmsensor (15) umfasst, der mit der Verarbeitungseinheit (12) wirkverbunden ist, um ein weiteres elektrisches Signal bereitzustellen, wobei die Verarbeitungseinheit (12) geeignet und konfiguriert ist, um eine weitere Alarmmeldung zu senden, wenn das weitere elektrische Signal Daten aufweist, die für ein mögliches Feuer im zu überwachenden Raum (c1, c2, ..., cN) repräsentativ sind.

11. Detektionssystem (1) nach einem der vorhergehenden Ansprüche, umfassend einen Behälterkörper (20, 21) und mindestens ein Befestigungselement (18), das geeignet und konfiguriert ist, um den Behälterkörper (20, 21) an einer Wand (23), vorzugsweise einer Decke, zu befestigen, die den zu überwachenden Raum (c1, c2, ..., cN) abgrenzt.

12. Detektionssystem (1) nach einem der vorhergehenden Ansprüche, wobei der Hochfrequenzsignaldetektor (11) ein digitaler terrestrischer DVB-T-Signalempfänger-Synthesizer ist oder diesen umfasst.

13. Detektionssystem (1) nach Anspruch 12, wobei der Hochfrequenzsignaldetektor (11) eine USB-Anschlussschnittstelle aufweist und wobei das detektierte elektrische Signal ein serielles Signal ist.

14. Detektionssystem (1) nach einem der vorhergehenden Ansprüche, wobei die periphere Steuereinheit (10) einen Manipulationssensor (16) umfasst, der mit der Verarbeitungseinheit (12) wirkverbunden ist, und wobei die Verarbeitungseinheit (12) geeignet und konfiguriert ist, um ein Manipulationsalarmsignal an die zentrale Steuereinheit (100) zu senden, wenn die Verarbeitungseinheit (12) detektiert, dass eine Manipulationsbedingung erfüllt ist.

## Revendications

1. Système de détection (1) adapté et conçu pour détecter une utilisation illégale d'un dispositif personnel de communication sans fil (2), comprenant :
- une pluralité d'unités périphériques de commande (10), chacune est installée ou destinée à être installée dans un espace intérieur respectif (c1, c2, ..., cN) à surveiller ;
- une unité centrale de commande (100), connectée fonctionnellement à la pluralité d'unités périphériques de commande (10), de préférence par un protocole Modbus TCP ;
chaque unité périphérique de commande (10) comprenant :
- un détecteur de signaux radioélectriques (11) adapté et conçu pour capter des rayonnements électromagnétiques transmis et/ou reçus par le dispositif personnel de communication sans fil (2) dans un spectre fréquentiel opérationnel et pour générer un signal électrique détecté associé à ces rayonnements électromagnétiques ;
- une unité de traitement (12), connectée fonctionnellement au détecteur de signaux radioélectriques (11) pour recevoir le signal électrique détecté, l'unité de traitement (12) étant adaptée et configurée pour analyser le signal électrique détecté et pour générer au moins un message d'alarme s'il détermine que le signal électrique détecté répond à au moins une condition d'alarme ;
- une interface de communication (13), adaptée pour connecter fonctionnellement l'unité périphérique de commande (10) à l'unité de commande centrale (100) pour permettre l'envoi du message d'alarme à l'unité de commande centrale (100) ;
dans lequel l'unité de traitement (12) est adaptée et configurée :
- pour analyser une pluralité de parties séparées (S1 à S5) de spectre fréquentiel (FS) du signal électrique détecté ;
- pour déterminer que ladite condition d'alarme s'est produite s'il détecte qu'une différence de mesure de puissance et/ou d'amplitude du signal électrique dépasse une première valeur seuil lors d'au moins deux périodes consécutives d'analyse temporelle d'une même partie (S1 à S5) du spectre fréquentiel (FS).

2. Système de détection (1) selon la revendication 1, dans lequel l'interface de communication (13) est une interface filaire de communication.

3. Système de détection (1) selon la revendication 2, dans lequel l'interface filaire de communication (13) est une interface Ethernet et dans lequel l'unité périphérique de commande (10) est alimentée par un système PoE (alimentation électrique par Ethernet).

4. Système de détection (1) selon l'une quelconque des revendications précédentes, dans lequel l'unité de traitement (12) est adaptée et configurée pour analyser périodiquement des parties spectrales distinctes (S 1 à S5) du signal électrique détecté dans une séquence temporelle.

5. Système de détection (1) selon l'une quelconque des revendications précédentes, dans lequel l'unité de traitement (12) est adaptée et configurée :
- pour analyser le signal électrique détecté ; et
- pour générer au moins un message de préalarme si il détermine que le signal électrique détecté répond à au moins une condition de préalarme, l'unité de traitement (12) permettant de déterminer que ladite condition de préalarme est remplie si elle détecte qu'une différence de mesure de puissance et/ou d'amplitude du signal électrique dans la partie de spectre dépasse une valeur seuil lors d'au moins une période d'analyse d'une partie du spectre (S1 à S5) ;
- pour envoyer le message de préalarme à l'unité périphérique de commande (100).

6. Système de détection (1) selon l'une quelconque des revendications précédentes, dans lequel l'unité périphérique de commande (10) comprend en outre une unité d'acquisition d'images (14), connectée fonctionnellement à l'unité de traitement (12), adaptée pour acquérir une ou plusieurs images dudit espace (c1, c2, ..., cN) à surveiller et l'unité de traitement (12) permettant d'envoyer lesdites images à l'unité centrale de commande (100) si elle détermine que le signal électrique répond à ladite condition d'alarme.

7. Système de détection (1) selon les revendications 5 et 6, dans lequel l'unité de traitement (12) permet d'activer l'unité d'acquisition d'images (14) lorsque la condition de préalarme et/ou d'alarme se produit et d'envoyer une ou plusieurs images à l'unité centrale de commande (100).

8. Système de détection (1) selon la revendication 6 ou 7, dans lequel l'unité centrale de commande (100) comprend un dispositif d'affichage (101) et est adaptée et configurée pour afficher lesdites une ou plusieurs images acquises sur le dispositif d'affichage (101).

9. Système de détection (1) selon la revendication 8, dans lequel l'unité centrale de commande (100) est adaptée et configurée pour afficher une carte (M) d'espaces (c1, c2, ..., cN) surveillés par le système de détection (1) sur le dispositif d'affichage (101) et dans lequel lesdites une ou plusieurs images acquises sont affichées dans une partie de la carte (M) correspondant à l'espace (c1, c2, ..., cN) auquel est associée l'unité périphérique de commande (10) ayant envoyé le message d'alarme.

10. Système de détection (1) selon l'une quelconque des revendications précédentes, dans lequel l'unité périphérique de commande (10) comprend en outre un capteur d'alarme incendie (15) connecté fonctionnellement à l'unité de traitement (12) pour fournir un signal électrique supplémentaire, l'unité de traitement (12) étant adaptée et configurée pour envoyer un autre message d'alarme si ledit autre signal électrique contient des données représentant un éventuel incendie dans l'espace (c1, c2, ..., cN) à surveiller.

11. Système de détection (1) selon l'une quelconque des revendications précédentes, comprenant un corps de conteneur (20, 21) et au moins un élément de fixation (18) adapté et conçu pour fixer le corps de conteneur (20, 21) à une paroi (23), de préférence un plafond, qui délimite ledit espace (c1, c2, ..., cN) à surveiller.

12. Système de détection (1) selon l'une quelconque des revendications précédentes, dans lequel le détecteur de signaux radioélectriques (11) est ou comprend un récepteur-synthétiseur de signaux terrestres numériques de DVB-T.

13. Système de détection (1) selon la revendication 12, dans lequel le détecteur de signaux radioélectriques (11) possède une interface de connexion USB et dans lequel le signal électrique détecté est un signal série.

14. Système de détection (1) selon l'une quelconque des revendications précédentes, dans lequel l'unité périphérique de commande (10) comprend un capteur de sabotage (16) connecté fonctionnellement à l'unité de traitement (12) et dans lequel l'unité de traitement (12) est adaptée et configurée pour envoyer un signal d'alarme antisabotage à l'unité centrale de commande (100) si l'unité de traitement (12) détecte qu'une condition de sabotage est remplie.
